# EUROPÄISCHE PATENTSCHRIFT

(11) **EP 0 843 075 B1**
(45) Veröffentlichungstag und Bekanntmachung des Hinweises auf die Patenterteilung: **28.05.2003**
(21) Anmeldenummer: 97810764.7
(22) Anmeldetag: 10.10.1997
(51) Int. Cl.: F01D 21/00, F02C 9/28, G05B 9/03, F01D 17/24

(54) **Verfahren und Vorrichtung zur Regelung von Turbomaschinen**
Method and apparatus for controlling turbomachinery
Méthode et dispositif pour la régulation des turbomachines

(30) Priorität: 15.11.1996 DE 19647281
(43) Veröffentlichungstag der Anmeldung: 20.05.1998
(73) Patentinhaber: ALSTOM (Switzerland) Ltd, 5401 Baden (CH)
(72) Erfinder: Wettstein, Hans, Dr., 5442 Fislisbach (CH)

(56) Entgegenhaltungen:
- US-A- 3 875 390
- US-A- 3 931 503
- US-A- 4 208 591
- US-A- 4 228 650
- US-A- 4 423 594
- US-A- 4 635 209
- US-A- 4 747 263
- US-A- 5 252 860

## Beschreibung

### Technisches Gebiet

Die Erfindung betrifft ein Verfahren zur Regelung von Turbomaschinen gemäss dem Oberbegriff des Anspruchs 1 und eine Vorrichtung zur Regelung von Turbomaschinen gemäss dem Oberbegriff des Anspruchs 6.

### Stand der Technik

Bisher wird bei der Regelung einer Turbomaschine, d.h. einer Gas- oder Dampfturbine, die Leistung als Regelgrösse zur Regelung der Anlage verwendet. Dabei kann ein aus irgend einem Grund fälschlicherweise zu niedriger Wert der Leistung eine gefährliche Regelbewegung in Richtung zur Leistungserhöhung verursachen, indem beispielsweise der Regler zufolge der fälschlichen Soll-Ist-Abweichung durch Öffnen des entsprechenden Regelorgans, z.B. eines Brennstoffventiles bei Gasturbinen oder eines Dampfventiles bei Dampfturbinen, die Sollleistung einzustellen trachtet. Eine solche Leistungserhöhung ist besonders gefährlich, wenn sie die anlagetypische Sollleistung überschreitet und dadurch zur Zerstörung der Anlage führen kann. Daher wurden bisher in der Leistungsmesskette redundante Einrichtungen vorgesehen, die einen fälschlicherweise gänzlichen Wegfall einer Regelgrösse verhindern sollten. Solche Lösungen sind jedoch geräte- und montageseitig sehr aufwendig und teuer.

Aus den Schriften US-A-4,208,591, US-A-4,747,263 und US-A-5,252,860 sind verschiedene Regelungsverfahren für Gasturbinenanlagen bekannt.

### Darstellung der Erfindung

Die Erfindung versucht, all diese Nachteile zu vermeiden. Ihr liegt die Aufgabe zugrunde, ein Verfahren und eine Vorrichtung anzugeben, welche gleiche Sicherheit wie redundante Einrichtungen für die Regelgrösse ergeben, jedoch wesentlich kostengünstiger sind.

Diese Aufgabe wird für das Verfahren mit den Merkmalen des Kennzeichens von Anspruch 1 und für die Vorrichtung mit den Merkmalen des Kennzeichens von Anspruch 6 gelöst. Vorteilhafte Ausführungsformen eines solchen Regelverfahrens bzw., einer solchen Regeleinrichtung sind durch die Merkmale der jeweils abhängigen Ansprüche umschrieben.

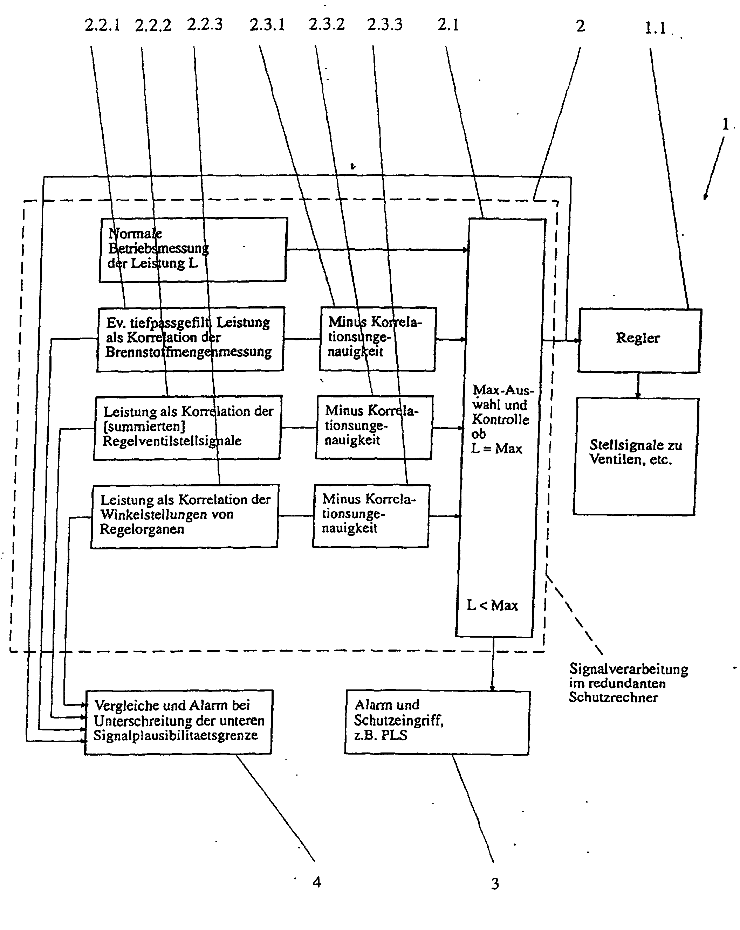

### Kurze Beschreibung der Zeichnung

Weitere Merkmale und Vorteile ergeben sich aus der Beschreibung einer beispielsweisen Ausführungsform anhand der Zeichnung. Diese zeigt
das Schaltbild der zu einem üblichen Regelkreis erfindungsgemäss zusätzlich erfoderlichen Einrichtungen.

Es sind nur die für das Verständnis der Erfindung wesentlichen Elemente gezeigt; insbesondere ist nicht der an sich bekannte und unveränderte Teil des Regelkreises dargestellt.

### Weg zur Ausführung der Erfindung

Bei einem Verfahren zur Regelung von Turbomaschinen, wird in der Regel ein charakteristisches Signal, insbesondere ein Leistungssignal dem Regler als Regelgrösse zugeführt. Damit bei einer scheinbaren Abnahme der Leistung zufolge einem Defekt in der Signalerzeugung oder -übermittlung die Anlage nicht nachgeregelt, d.h. zu höherer Leistung, also damit zu einer über der Soll-Leistung liegenden Leistung geregelt wird, ist, anstelle von bisher üblichen redundanten Signalkreisen in den Leistungsmessketten, das Leistungssignal mit einer Anzahl weiterer leistungssignifikanter Signale aus dem Anlagenkreis zu einem Signalset einem vereinigt. Die Signale dieses Sets werden in einer Vergleichs- und Auswahleinheit mit einander verglichen, wobei eine sogenannte Maximumauswahl unter den Signalen vorgenommen wird. D.h. es wird das Maximalsignal dieses Signalsets eruiert und dieses und dem Regler als neues, wirksames Leistungssignal zugeführt [siehe Fig.], aufgrund dessen also die Anlage geregelt wird. Als solche leistungssignifikante Signale können beispielsweise bei einer Gasturbine vorzugsweise mindestens zwei der folgenden Signale verwendet werden: Brennstoffmengenmesssignal, Signal der kommandierten Brennstoffregelventilstellung, Kompressordrucksignal, Abgastemperatursignal, Signal der Vorleitreihenstellung, sowie eine rechnerische Kombination aus obigen Signalen. Bei einer Dampfturbine können als Zusatzsignale ebenfalls vorzugsweise zwei der folgenden Signale verwendet werden: Signal der Dampfregelventilstellung, die Dampfdrucksignale vor und nach Turbinen, Signale der Frischdampftemperaturen und ebenfalls eine rechnerische Kombination aus diesen. Die zusätzlich zum normalen Leistungssignal verwendeten, oben genannten, mit der Leistung der Anlage korrelierten Signale werden rechnerisch so aufbereitet, dass sie ein mit dem normalen Leistungssignal vergleichbares Signal ergeben. Solche Aufbereitungsmassnahmen können, auch Bandpass- oder Tiefpass-Filterung oder auch Signalverzögerungen sein. Insbesondere werden diese Zusatzsignale in Leistung umgerechnet und mit einem Abzug versehen, so dass es äusserst unwahrscheinlich wird, dass sie bei Normalfunktion der Leistungsmessung das normale Leistungssignal übertreffen. Dieser Abzug von jedem aufbereiteten leistungssignifikanten Signal ist ein typischer Betrag für die Korrelationsungenauigkeit des Korrelationsverfahrens. Insbesondere wird damit gewährleistet, dass jedes korrelierte Signal des Signalsets bei normalen Betriebsbedingungen etwas kleiner als das Leistungssignal ist. Zusammen mit der Maximalauswahl aus diesem Signalset ist somit gewährleistet, dass bei Normalfunktion der Anlage und der Ueberwachungsanlage immer das normale Leistungssignal die Anlage regelt. Nur im Fall, wenn dieses normale Leistungssignal aufgrund irgend eines Defektes im Leistungsmesskreis oder anderen relevanten Einrichtungen von der dem tatsächlichen Betriebszustand entsprechenden Leistung abweicht, insbesondere nach unten abweicht oder ganz ausfällt, werden die Zusatzsignale wirksam. Sie regeln die Anlage solange, bis der Fehler im Leistungsmesskreis etc. behoben werden konnte. Damit ist ein sofortiger Schnellschluss, d.h. ein immer gefährliches notfallmässiges Abstellen der Anlage in den meisten Fällen vermeidbar, was nicht nur den Betriebsausfall und die damit entstehenden Kosten vermeidet, sondern auch die Anlage schont. Redundante Leistungsmesskreise können dies zwar auch, doch sind diese sehr wesentlich teurer in Produktion und Wartung als die Version mit dem zusätzlichen Signalset. Darüberhinaus werden die Zusatzsignale in geeigneter Weise auf Plausibilität der Korrelation mit der Leistung äberwacht, insbesondere auf zu tiefe Werte geprüft.Störungen dieser Art zeigen eine verminderte Fail-Safe-Sicherheit an und können angezeigt, sowie im allgemeinen ohne Betriebsunterbrechung behoben werden. Erst der Ausfall aller Signale zwingt zur Stilllegung der Anlage. Bezüglich der Sicherheit ist jedoch jedes verwendete Signal einzeln als Schutzbegrenzung wirksam. Bei Gasturbinen vermeidet die Erfindung, dass durch Leistungssignalfehler zu hohe Temperaturen des Leistungsverbrauchers auftreten.

Eine Vorrichtung zur Regelung von Turbomaschinen gemass dem Verfahren weist einen Regelkreis 1 zur Abgabe von Stellsignalen für Steuereinrichtungen der Anlage auf, wobei dem Regelkreis 1 ein Kontrollkreis 2 vorgeschaltet ist, der eine Vergleichs- und Auswahleinheit 2.1 aufweist, an der ausser dem Leistungssignal des Regelkreieses 1 zusätzlich wenigstens ein weiteres leistungssignifikantes Signal liegt, wobei alle anliegenden Signale ein Singalset bilden. Die Vergleichs- und Auswahleinheit 2.1 bestimmt aus diesem Signalset das Maximalsignal. Ihr Ausgangssignal liegt an einem Regler 1.1 des Regelkreises 1 als Eingangssignal anstelle des direkten Leistungssignales an. Ausserdem ist an die Vergleichs- und Auswahleinheit 2.1 ein Alarmkreis 3 angeschlossen, an dem von der Vergleichs- und Auswahleinheit 2.1 dann ein Signal anliegt, wenn nicht das Leistungssignal, sondern ein leistungssignifikantes Signal aus dem Signalset das Maximalsignal ist und somit dieses an den Regler 1.1 weitergeleitet wird. An diesen Alarmkreis 3 ist seinerseits eine Alarm- oder Abschalteinrichtung angeschlosssen, um die Anlage zu kontrollieren oder auf Teillast zu stellen oder ganz abzuschalten. Diese Kontrolle kann automatisch oder manuell erfolgen. Der Kontrollkreis 2 weist fuer jedes zugeführte leistungssignifikante Signal des Signalsets je eine Korrelationseinrichtung 2.2.i auf. In dieser werden die zugeführten leistungssignifikanten Signale zum Vergleich mit dem direkten Leistungssignal rechnerisch aufbereitet. Insbesondere kann diese Korrelationseinrichtung 2.2.i auch Bandpass- und/oder Tiefpassfilter, sowie ev. Verzöerungsglieder enthalten. Es kann aber auch eine einzige Korrelationseinrichtung für alle zugeführten leistungssignifikanten Signale vorgesehen sein, wobei bei einer solchen Anordnung die Aufbereitung der zusätzlichen, korrelierten Signale nicht zeitlich parallel, sondern nacheinander, sequentiell und zykisch erfolgt. Jedes Signal wird dabei nach einem separaten Verfahren und nach für dieses Signal spezifischen Kriterien und Zusammenhängen und Beziehungen aufbereitet.

Jeder Korrelationseinrichtung 2.2.i ist ausserdem eine Subtraktionseinrichtung 2.3.i zugeordnet oder in sie integriert, wobei in der Subtraktionseinrichtung 2.3.i von jedem aufbereiteten leistungssignifikan Signal ein typischer Betrag als Korrelationsungenauigkeit abgezogen wird. Damit ist jedes korrelierte Signal des Signalsets bei normalen Betriebsbedingungen etwas kleiner als das Leistungssignal. Ausserdem ist eine Signalausfall- und Plausibilitätsprüfeinrichtung 4 vorgesehen, welche die leistungssignifikanten Signale auf Signalausfall und/oder auf Plausibilität der Korrelation mit dem Leistungssignal bezüglich zu tiefer Werte überwacht. Diese Plausibilitätsprüfeinrichtung 4 kann an jede der einzelnen Korrelationseinrichtungen 2.2.i oder an die gemeinsame Korrelationseinrichtung angeschlossen sein.

Der Kontrollkreis wird vorzugsweise redundant an der Turbinenanlage vorgesehen. Diese kann ihrerseits auf Kanalstörungen überwacht werden und bei auftreten solcher Störungen werden diese gleich wie die Störungen bei Zusatzsignalen behandelt. Sie können angezeigt und im allgemeinen ohne Betriebsunterbruch behoben werden.

### Bezugszeichen

- Regelkreis: 1
- Regler: 1.1
- Kontrollkreis: 2
- Auswahleinheit: 2.1
- Korrelationseinrichtungen: 2.2.i
- Subtraktionseinrichtung: 2.3.i
- Alarmkreis: 3
- Plausibilitätsprüfeinrichtung: 4

## Patentansprüche

1. Verfahren zur Regelung von Turbomaschinen, wobei ein charakteristisches Signal, insbesondere ein Leistungssignal, dem Regler (1.1) als Regelgrösse zugeführt wird, **dadurch gekennzeichnet, dass** dieses Leistungssignal in einer Vergleichs- und Auswahleinheit (2.1) mit einer Anzahl weiterer leistungssignifikanter Signale aus dem Anlagenkreis ein Signalset bildet, dass die Signale dieses Signalsets aufbereitet und danach miteinander verglichen werden, dass dabei eine Maximumauswahl unter den Signalen und eine Kontrolle, ob das Leistungssignal das Maximalsignal ist, vorgenommen wird und dass das Maximalsignal aus diesem Signalset an den Regler (1.1) weitergeleitet wird.

2. Verfahren nach Anspruch 1, **dadurch gekennzeichnet, dass** im Fall, in welchem nicht das Leistungssignal, sondern ein leistungssignifikantes Signal aus dem Signalset das Maximalsignal ist und somit dieses an den Regler (1.1) weitergeleitet wird, ein Alarmkreis (3) angesteuert wird.

3. Verfahren nach Anspruch 2, **dadurch gekennzeichnet, dass** bei Ansteuerung des Alarmkreises (3) von diesem Alarmeinrichtungen oder Schutzeingriffe in die Anlage ausgelöst werden.

4. Verfahren nach Anspruch 1, **dadurch gekennzeichnet, dass** von den aufbereiteten leistungssignifikanten Signalen ein je für das Signal typischer Betrag als Korrelationsungenauigkeit abgezogen wird, wodurch jedes korrelierte Signal des Signalsets bei normalen Betriebsbedingungen etwas kleiner als das Leistungssignal ist.

5. Verfahren nach einem der Ansprüche 1 bis 4, **dadurch gekennzeichnet, dass** die leistungssignifikanten Signale auf Signalausfall und/oder auf Plausibilität der Korrelation mit dem Leistungssignal bezüglich zu tiefer Werte überwacht werden.

6. Vorrichtung zur Regelung von Turbomaschinen gemäss dem Verfahren nach Anspruch 1, mit einem Regelkreis (1) zur Abgabe von Steilsignalen für Steuereinrichtungen der Anlage,
**dadurch gekennzeichnet, dass**
dem Regelkreis (1) ein Kontrollkreis (2) vorgeschaltet ist, der eine Vergleichs- und Auswahleinheit (2.1) aufweist, an der ausser dem Leistungssignal des Regelkreises (1) zusätzlich wenigstens ein weiteres leistungssignifikantes Signal liegt, wobei alle anliegenden Signale ein Signalset bilden, wobei der Kontrolikreis (2) für jedes zugeführte leistungssignifikante Signal des Signalsets je eine Korrelationseinrichtung (2.2.i) oder eine Korrelationseinrichtung für alle zugeführten leistungssignifikanten Signale aufweist, in welchen bzw. welcher die zugeführten leistungssignifikanten Signale zum Vergleich mit dem direkten Leistungssignal aufbereitet werden, und wobei die Vergleichs- und Auswahleinheit (2.1) aus diesem Signalset das Maximalsignal bestimmt und dieses als Eingangssignal an einem Regler (1.1) des Regelkreises (1) anstelle des direkten Leistungssignales anliegt.

7. Vorrichtung nach Anspruch 6, **dadurch gekennzeichnet, dass** an die Vergleichs- und Auswahleinheit (2.1) ein Alarmkreis (3) angeschlossen ist, an dem von der Vergleichs- und Auswahleinheit (2.1) dann ein Signal anliegt, wenn nicht das Leistungssignal, sondern ein leistungssignifikantes Signal aus dem Signalset das Maximalsignal ist.

8. Vorrichtung nach Anspruch 7, **dadurch gekennzeichnet, dass** der Alarmkreis (3) seinerseits Alarm- oder Abschalteinrichtungen ansteuert, um die Anlage zu kontrollieren oder auf Teillast zu stellen oder ganz abzuschalten.

9. Vorrichtung nach Anspruch 6, **dadurch gekennzeichnet, dass** jeder Korrelationseinrichtung (2.2.i) eine Subtraktionseinrichtung (2.3.i) zugeordnet ist oder dass jene eine solche aufweist, in der von jedem aufbereiteten leistungssignifikanten Signal ein typischer Betrag als Korrelationsungenauigkeit abgezogen wird, damit jedes korrelierte Signal des Signalsets bei normalen Betriebsbedingungen etwas kleiner als das Leistungssignal ist.

10. Vorrichtung nach einem der Ansprüche 6 bis 9, **dadurch gekennzeichnet, dass** eine Signalausfall- und Plausibilitätsprüfeinrichtung (4) vorgesehen ist, welche die leistungssignifikanten Signale auf Signalausfall und/oder auf Plausibilität der Korrelation mit dem Leistungssignal bezüglich zu tiefer Werte überwacht.

## Claims

1. Method of controlling turbomachines, a characteristic signal, in particular a performance signal, being fed to the controller (1.1) as controlled variable, **characterized in that** this performance signal, together with a number of further signals significant of the performance from the plant circuit, forms a signal set in a comparison and selection unit (2.1), **in that** the signals from this signal set are conditioned and then compared with one another, **in that** at the same time a maximum selection among the signals and monitoring as to whether the performance signal is the maximum signal is performed, and **in that** the maximum signal from this signal set is forwarded to the controller (1.1).

2. Method according to Claim 1, **characterized in that** an alarm circuit (3) is activated in the case in which it is not the performance signal but a signal significant of the performance from the signal set that is the maximum signal, and hence this is forwarded to the controller (1.1).

3. Method according to Claim 2, **characterized in that** in the event of activating the alarm circuit (3), the latter triggers alarm devices or protective interventions in the plant.

4. Method according to Claim 4, **characterized in that**, from the conditioned signals significant of the performance, an amount that is typical of the signal in each case is subtracted as correlation inaccuracy, which results in each correlated signal from the signal set being somewhat smaller than the performance signal under normal operating conditions.

5. Method according to one of Claims 1 to 4, **characterized in that** the signals significant of the performance are monitored for signal failure and/or for plausibility of the correlation with the performance signal in relation to excessively low values.

6. Device for controlling turbomachines according to the method according to Claim 1, having a control loop (1) for the output of actuating signals for control devices of the plant, **characterized in that** the control loop (1) is preceded by a monitoring loop (2) that has a comparison and selection unit (2.1), to which, apart from the performance signal of the control loop (1), at least one further signal significant of the performance is additionally applied, all the applied signals forming a signal set, the monitoring loop (2) having one correlation device (2.2.i) each for each supplied signal significant of the performance from the signal set or a correlation device for all the supplied signals significant of performance, in which device or devices the supplied signals significant of the performance are conditioned for the purpose of comparison with the direct performance signal, and the comparison and selection units (2.1) determining the maximum signal from this signal set and applying the said maximum signal as input signal to a controller (1.1) of the control loop (1) in place of the direct performance signal.

7. Device according to Claim 6, **characterized in that** there is connected to the comparison and selection unit (2.1) an alarm circuit (3) to which a signal is applied by the comparison and selection unit (2.1) when it is not the performance signal but a signal significant of the performance from the signal set that is the maximum signal.

8. Device according to Claim 8, **characterized in that** the alarm circuit (3), for its part, activates alarm or switch-off devices in order to monitor the plant or to set it to part load or switch it off entirely.

9. Device according to Claim 10, **characterized in that** each correlation device (2.2.i) is assigned a subtraction unit (2.3.i) or **in that** each has such a unit in which, from each conditioned signal significant of the performance, a typical amount is subtracted as correlation inaccuracy, in order that each correlated signal from the signal set is somewhat smaller than the performance signal under normal operating conditions.

10. Device according to one of Claims 6 to 9, **characterized in that** a signal failure and plausibility testing device (4) is provided, which monitors the signals significant of the performance for signal failure and/or for plausibility of the correlation with the performance signal in relation to excessively low values.

## Revendications

1. Procédé de réglage de turbomachines, un signal caractéristique, en particulier un signal de puissance, étant transmis au régulateur (1.1) comme grandeur de réglage, **caractérisé en ce que** ce signal de puissance forme dans une unité de comparaison et de sélection (2.1) avec un nombre d'autres signaux significatifs de la puissance du circuit de l'installation un jeu de signaux, que les signaux de ce jeu de signaux sont traités et ensuite comparés entre eux, que l'on procède alors à une sélection du maximum parmi les signaux et à un contrôle vérifiant si le signal de puissance est le signal maximal et que le signal maximal est transmis du jeu de signaux au régulateur (1.1).

2. Procédé selon la revendication 1, **caractérisé en ce que**, au cas où ce ne serait pas le signal de puissance mais un signal significatif de la puissance du jeu de signaux qui serait le signal maximal et qu'il serait alors transmis au régulateur (1.1), un circuit d'alarme (3) est excité.

3. Procédé selon la revendication 2, **caractérisé en ce qu'**en cas d'excitation du circuit d'alarme (3), celui-ci déclenche des dispositifs d'alarme ou interventions de protection dans l'installation.

4. Procédé selon la revendication 1, **caractérisé en ce qu'**une somme typique de chaque signal est soustraite des signaux significatifs de la puissance traités comme erreur de corrélation rendant chaque signal corrélé du jeu de signaux légèrement inférieur au signal de puissance sous conditions de fonctionnement normal.

5. Procédé selon une de revendications 1 à 4, **caractérisé en ce que** les signaux significatifs de la puissance sont surveillés quant à la défaillance de signal et/ou plausibilité de corrélation avec le signal de puissance par rapport à des valeurs trop basses.

6. Dispositif pour le réglage de turbomachines selon le procédé de la revendication 1 avec un circuit de réglage (1) destiné à émettre des signaux de réglage pour des unités de réglage de l'installation, **caractérisé en ce qu'**un circuit de contrôle (2) est installé en amont du circuit de réglage (1), présentant une unité de comparaison et de sélection (2.1) à laquelle est appliqué en dehors du signal de puissance du circuit de réglage (1) en plus au moins un autre signal significatif de la puissance, tous les signaux présents formant un jeu de signaux, le circuit de contrôle (2) présentant pour chaque signal significatif de la puissance du jeu de signaux qui lui est fourni une unité de corrélation (2.2.i) ou une unité de corrélation pour tous les signaux significatifs de la puissance fournis dans laquelle ou dans lesquelles les signaux significatifs de la puissance fournis sont traités pour la comparaison avec le signal de puissance direct et l'unité de comparaison et de sélection (2.1) déterminant à partir de ce jeu de signaux le signal maximal pour l'appliquer comme signal d'entrée à un régulateur (1.1) du circuit de réglage (1) à la place du signal de puissance direct.

7. Dispositif selon la revendication 6, **caractérisé en ce qu'**un circuit d'alarme (3) est connecté à l'unité de comparaison et de sélection (2.1) auquel un signal est appliqué par l'unité de comparaison et de sélection (2.1) lorsque ce n'est pas le signal de puissance qui constitue le signal maximal mais un signal significatif de la puissance provenant du jeu de signaux.

8. Dispositif selon la revendication 7, **caractérisé en ce que** le circuit d'alarme (3) excite à son tour des dispositifs d'alarme ou de coupure afin de contrôler l'installation, de la commuter sur charge partielle ou de la couper complètement.

9. Dispositif selon la revendication 6, **caractérisé en ce qu'**une unité de soustraction (2.3.i) est attribuée à chaque unité de corrélation (2.2.i) ou que celle-ci en présente une, dans laquelle un montant typique est soustrait de chaque signal traité significatif de la puissance comme erreur de corrélation pour que chaque signal corrélé du jeu de signaux soit légèrement inférieur au signal de puissance sous conditions de fonctionnement normal.

10. Dispositif selon une des revendications 6 à 9, **caractérisé en ce qu'**une unité de vérification de défaillance de signal ou de plausibilité (4) est prévue, qui surveille les signaux significatifs de la puissance quant à une défaillance de signal et/ou à la plausibilité de la corrélation avec le signal de puissance par rapport à des valeurs trop basses.
